# EUROPÄISCHE PATENTSCHRIFT

(11) **EP 3 438 111 B1**
(45) Veröffentlichungstag und Bekanntmachung des Hinweises auf die Patenterteilung: **20.11.2019**
(21) Anmeldenummer: 17183998.8
(22) Anmeldetag: 31.07.2017
(51) Int. Cl.: C07F 9/48, C07B 41/06, C07F 15/00

(54) **PHOSPHONITE MIT EINER DIREKT AM PHOSPHOR GEBUNDENEN TERT.-BUTYL-GRUPPE**
PHOSPHINITES WITH A TERTIARY BUTYL GROUP BOUND DIRECTLY TO THE PHOSPHOR
PHOSPHINITE AYANT UN GROUPE TERT.BUTYL RELIÉ DIRECTEMENT AU PHOSPHORE

(43) Veröffentlichungstag der Anmeldung: 06.02.2019
(73) Patentinhaber: Evonik Degussa GmbH, 45128 Essen (DE)
(72) Erfinder: FRANKE, Robert, 45772 Marl (DE); BÖRNER, Armin, 18059 Rostock (DE); SELENT, Detlef, 18059 Rostock (DE)
(74) Vertreter: Evonik Patent Association

(56) Entgegenhaltungen:
- DATABASE REAXYS [Online] ELSEVIER; 1978, Feshchenko: "XRN = 1878051", XP002777149, Database accession no. XRN = 1878051 & FESHCHENKO ET AL: J. GEN. CHEM USSR (ENGL. TRANSL.), Bd. 48, 1978, Seiten 365-368,
- MARTA GIMÉNEZ-PEDRÓS ET AL: "New Ligands for Rh-Catalysed Hydroformylation of 1-Octene in Supercritical Carbon Dioxide - X-ray Structure of [Rh{PPh2(OC9H19)}4]PF6", EUROPEAN JOURNAL OF INORGANIC CHEMISTRY - CHEMISCHE BERICHTE, Bd. 2006, Nr. 5, 1. März 2006 (2006-03-01) , Seiten 1067-1075, XP055439358, DE ISSN: 1434-1948, DOI: 10.1002/ejic.200500790
- ROBERT FRANKE ET AL: "Applied Hydroformylation", CHEMICAL REVIEWS, Bd. 112, Nr. 11, 14. November 2012 (2012-11-14), Seiten 5675-5732, XP055091930, ISSN: 0009-2665, DOI: 10.1021/cr3001803

## Beschreibung

Die Erfindung betrifft Phosphonite mit einer direkt am Phosphor gebundenen *tert*.-Butyl-Gruppe. Die Reaktionen zwischen Olefinverbindungen, Kohlenmonoxid und Wasserstoff in Gegenwart eines Katalysators zu den um ein C-Atom reicheren Aldehyden ist als Hydroformylierung bzw. Oxierung bekannt. Als Katalysatoren in diesen Reaktionen werden häufig Verbindungen der Übergangsmetalle der VIII. Gruppe des Periodensystems der Elemente verwendet. Bekannte Liganden sind beispielsweise Verbindungen aus den Klassen der Phosphine, Phosphite und Phosphonite mit jeweils dreiwertigem Phosphor P^{III}. Eine gute Übersicht über den Stand der Hydroformylierung von Olefinen findet sich in R. Franke, D. Selent, A. Börner, "Applied Hydroformylation", Chem. Rev., 2012, DOI:10.1021/cr3001803.

MARTA GIMÉNEZ-PEDRÓS ET AL, EUROPEAN JOURNAL OF INORGANIC CHEMISTRY - CHEMISCHE BERICHTE, Nr. 5, 2006, Seiten 1067-1075 offenbart die Rhodium-katalysierte Hydroformylierung von 1-Okten.

Der Erfindung lag die Aufgabe zugrunde, Phosphonite bereitzustellen, welche als Liganden in der Hydroformylierung eingesetzt werden können, und dort einen guten Anteil an Nonanal am Gesamtaldehyd liefern.

Gelöst wird die Aufgabe durch eine Verbindung gemäß Anspruch 1.

Verbindung der Formel (**I**): 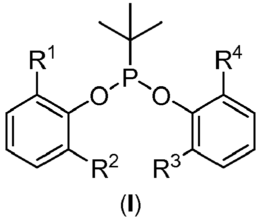 wobei
R¹, R², R³, R⁴ ausgewählt sind aus: -H, -(C₁-C₁₂)-Alkyl, -O-(C₁-C₁₂)-Alkyl, -(C₆-C₂₀)-Aryl, -O-(C₆-C₂₀)-Aryl;
wobei mindestens einer der Reste R¹, R², R³, R⁴ nicht für -H steht;
wobei die genannten Alkylgruppen und Arylgruppen wie folgt substituiert sein können: substituierte -(C₁-C₁₂)-Alkylgruppen, substituierte -O-(C₁-C₁₂)-Alkyl, substituierte -(C₆-C₂₀)-Aryl, substituierte -O-(C₆-C₂₀)-Aryl können einen oder mehrere Substituenten aufweisen; die Substituenten sind unabhängig voneinander ausgewählt aus: -(C₁-C₁₂)-Alkyl, -O-(C₁-C₁₂)-Alkyl, Halogen.

In einer Ausführungsform sind R¹, R², R³, R⁴ ausgewählt aus: -(C₁-C₁₂)-Alkyl, -(C₆-C₂₀)-Aryl.

In einer Ausführungsform stehen R¹, R², R³, R⁴ für -(C₁-C₁₂)-Alkyl.

In einer Ausführungsform stehen R¹, R², R³, R⁴ für -(C₆-C₂₀)-Aryl.

In einer Ausführungsform stehen R¹, R², R³, R⁴ für den gleichen Rest.

In einer Ausführungsform weist die Verbindung (I) die folgende Struktur auf:

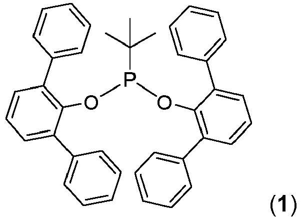

In einer Ausführungsform weist die Verbindung (I) die folgende Struktur auf:

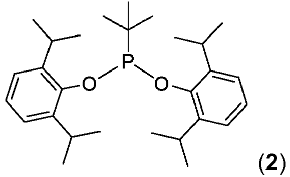

Neben der Verbindung an sich wird auch deren Verwendung in einem Ligand-Metall-Komplex zur Katalyse einer Hydroformylierungsreaktion beansprucht.

Verwendung einer zuvor beschriebenen Verbindung in einem Ligand-Metall-Komplex zur Katalyse einer Hydroformylierungsreaktion.

Des Weiteren wird auch ein Verfahren beansprucht, in welchem eine zuvor beschriebene Verbindung eingesetzt wird.

Verfahren umfassend die Verfahrensschritte:
a) Vorlegen eines Olefins,
b) Zugabe eines Komplexes, welcher eine zuvor beschriebene Verbindung umfasst, sowie ein Metall ausgewählt aus: Rh, Ru, Co, Ir,
   oder einer zuvor beschriebene Verbindung und einer Substanz, welche ein Metall ausgewählt aus: Rh, Ru, Co, Ir aufweist;
c) Zuführen von H₂ und CO,
d) Erwärmen des Reaktionsgemisches, wobei das Olefin zu einem Aldehyd umgesetzt wird.

In einer Variante des Verfahrens ist das Metall Rh.

Im Folgenden wird die Erfindung anhand von Ausführungsbeispielen näher erläutert.

### Ligandensynthese

### Ligand 1: Di([1,1':3',1"-terphenyl]-2'-yl)tert.-butylphosphonit

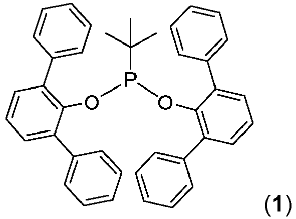

Eine gerührte Lösung von 2,6-Diphenylpropylphenol (0,552 g; 2,242 mmol) in THF (6 ml) wird bei 0 °C tropfenweise mit einer Lösung von Benzylkalium (0,292 g; 2,242 mmol) in THF (10 ml) versetzt. Man rührt weitere 30 min bei 0 °C und setzt dann bei Raumtemperatur eine Lösung von *tert*.-Butyldichlorphosphin (0,178 g; 1,121 mmol) in THF (5 ml) zu. Die Rektionsmischung wird über Nacht bei Raumtemperatur und weitere 3 h bei 70 °C gerührt. Man filtriert, verdampft das Lösungsmittel im Vakuum, und trocknet den weißen Rückstand 2 h bei 50°C/0,1 mbar.
Ausbeute: 0,616 g (1,063 mmol, 94%).
Elementaranalyse (ber. für C₄₀H₃₅O₂P = 578,69 g/mol): C 83,27 (83,02); H 5,98 (6,10); P 5,01 (5,35)%.
³¹P-NMR (CD₂Cl₂): 202,3 (s) ppm.
¹H-NMR (THF-D₈): -0,02 (d, ³*J*_{HP}= 12,4 Hz; 9H); 7,01-7,19 (m, 26H) ppm.
¹³C NMR (CD₂Cl₂) 22,2 (d, ²*J*_{CP}= 13,5 Hz); 35,9 (d, *J*_{CP}= 38,2 Hz); 123,2; 126,9; 128,2; 130,5; 131,1, 135,6; 139,5; 149,3 ppm.
EI HRMS: *m*/*z* 578,23569 [M⁺], ber.: *m*/*z* 578,23692.

### Ligand 2: Bis(2,6-diisopropylphenyl)-tert.-butylphosphonit

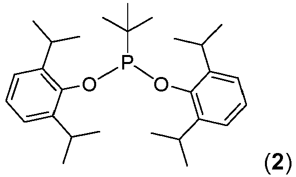

Eine gerührte Lösung von 2,6-Diisopropylphenol (0,492 g; 2,763 mmol) in THF (7 ml) wird bei 0 °C tropfenweise mit einer Lösung von Benzylkalium (0,360 g; 2,763 mmol) in THF (10 ml) versetzt. Man rührt weitere 30 min bei 0 °C und setzt dann eine Lösung von *tert.-*Butyldichlorphosphin (0,219 g; 1,381 mmol) in THF (5 ml) zu. Die Rektionsmischung wird über Nacht bei Raumtemperatur gerührt. Man filtriert durch Kieselgur, verdampft das Lösungsmittel des Filtrates im Vakuum und trocknet den Rückstand 3 h bei 0,1 mbar. Der erhaltene Feststoff wird mit Acetonitril (4 ml) verrührt, abfiltriert und im Vakuum getrocknet. Ausbeute: 0,250 g (0,565 mmol; 20%).

Elementaranalyse (ber. für C₂₈H₄₃O₂P = 442,62 g/mol): C 75,85 (75,98); H 9,91 (9,79) %. ³¹P-NMR (CD₂Cl₂): 197,0 (s) ppm.
¹H-NMR (CD₂Cl₂): 1,09-1,13 (m, 24H); 1,32 (d, ³*J*_{HH}= 12,8 Hz 9H); 3,50 (m, 6H); 7,02-7,12 (m, 6H) ppm.
¹³C-NMR (CD₂Cl₂): 22,9; 23,3; 23,3; 23,6; 24,2; 24,3; 27,4 (d, ²*J*_{CP}= 6,7 Hz), 36.9 (d, *J*_{CP}= 19,3 Hz), 124,1; 124,4; 140,2; 140,2; 149,6 ppm.
ESI-TOF/HRMS: *m*/*z* 443,30733; [M⁺+H], ber.: *m*/*z* 443,30734.

### Ligand 3: Bis(2,4-di-tert.-butylphenyl)tert.-butylphosphonit (Vergleichsligand)

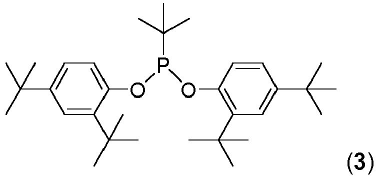

### Ligand 4: 2,4,6,8,10-Penta-tert.-butyldibenzo[d,f][1,3,2]dioxaphosphepin (Vergleichsligand)

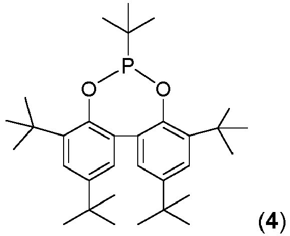

### Ligand 5: 6-(tert.-Butyl)dibenzo[d,f][1,3,2]dioxaphosphepin (Vergleichsligand)

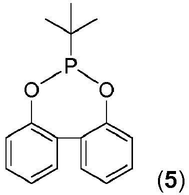

Eine Mischung von 2,2'-Dihydroxybiphenyl (0,433 g; 2,328 mmol) und Triethylamin (0,71 ml) in Toluol (8 ml) wird bei Raumtemperatur unter Rühren mit einer Lösung von *tert.-*Butyldichlorphosphin (0,370 g; 2,328 mmol) in Toluol (8 ml) versetzt. Die Reaktionsmischung wird über Nacht bei Raumtemperatur gerührt, filtriert, und das Filtrat im Vakuum eingeengt. Trocknen des viskosen Rückstandes für 2 h bei 50°C/0,1 mbar ergibt 0,454 g (1,667 mmol; 71%).

Elementaranalyse (ber. für C₁₆H₁₇O₂P = 272,28 g/mol): C 70,64 (70,58); H 6,23 (6,29); P 11,45 (11,38)%.
³¹P-NMR (CD₂Cl₂): 206,8 (s) ppm.
¹H-NMR (THF-D₈): 1,18 (d, ³*J*_{HP} = 12,7 Hz; 9H); 7,25-7,53 (m, 8H) ppm.
¹³C NMR (CD₂Cl₂) 23,4 (d, ²*J*_{CP}= 17,4 Hz); 37,8 (d, *J*_{CP}= 33,5 Hz); 122,4; 125,1; 129,7; 130,8; 131,4, 153,3 (d, ²*J*_{CP}= 6,8 Hz)ppm.
EI HRMS: *m*/*z* 272,09611 [M⁺], ber.: *m*/*z* 272,09607.

### Ligand 6: 2-(tert.-Butyl)naphtho[1,8-de][1,3,2]dioxaphosphinine (Vergleichsligand)

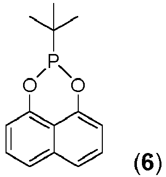

Eine Mischung von 1,8-Dihydroxynaphthalin (0,475 g; 2,964 mmol) und Triethylamin (0,9 ml) in Toluol (8 ml) wird bei Raumtemperatur unter Rühren mit einer Lösung von *tert.-*Butyldichlorphosphin (0,471 g; 2,964 mmol) in Toluol (8 ml) versetzt. Die Rektionsmischung wird über Nacht bei Raumtemperatur und weitere 4 h bei 70 °C gerührt. Man filtriert, verdampft das Lösungsmittel im Vakuum, und trocknet den viskosen Rückstand 4 h bei 50°C/0,1 mbar. Nach Zusatz von Heptan (7 ml) wird über Nacht gerührt. Man dekantiert vom öligen Bodensatz, engt die Heptanphase zur Trockne ein und trocknet den Rückstand bei 50°C/0,1 mbar. Ausbeute: 0,597 g (2,424 mmol, 82%).

Elementaranalyse (ber. für C₁₄H₁₅O₂P = 246,24 g/mol): C 68,21 (68,29); H 6,14 (6,14); P 12,41 (12,58)%.
³¹P-NMR (CD₂Cl₂): 178,8 (s) ppm.
¹H-NMR (CD₂Cl₂): 1,17 (d, ³*J*_{HP}= 13,2 Hz; 9H); 7,08 (d, br, ⁵*J*_{HP}= 13,2 Hz; 2H); 7,47 (dd, ³*J*_{HH}= 8,3 Hz; ⁴*J*_{HP}= 7,9 Hz, 2H); 7,58 (d,br, ³*J*_{HH}= 8,3 Hz; 2H) ppm.
¹³C NMR (CD₂Cl₂): 21,8 (d, ²*J*_{CP}= 18,6 Hz); 36,2 (d, *J*_{CP}= 22,5 Hz); 112,5; 116,4; 121,6; 126,6; 135,3; 148,0 ppm.
EI HRMS: *m*/*z* 246,08038 [M⁺], ber.: *m*/*z* 246,08042.

### Ligand 7: 2-(tert.-Butyl)anthra[1,9-de][1,3,2]dioxaphosphinin-11-ol (Vergleichsligand)

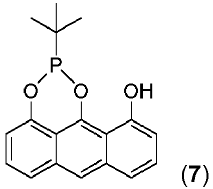

Eine Mischung von Anthracentriol (0,447 g; 1,975 mmol) und Triethylamin (0,61 ml) in Toluol (7 ml) wird bei Raumtemperatur unter Rühren mit einer Lösung von *tert*.-Butyldichlorphosphin (0,314 g; 1,975 mmol) in Toluol (5 ml) versetzt. Die Reaktionsmischung wird über Nacht bei Raumtemperatur gerührt, filtriert, und das Filtrat zur Trockne eingeengt. Der Rückstand wird 2 h bei 40°C/0,1 mbar getrocknet und säulenchromatografisch (Hexan/Dichlormethan; 1,5:1; R*_{f}* = 0,4) aufgearbeitet. Ausbeute: 0,287 g (0,92 mmol, 44%).

Elementaranalyse (ber. für C₁₈H₁₇O₃P = 312,30 g/mol): C 69,42 (69,23); H 5,64 (5,48); P 9,86 (9,92)%.
³¹P-NMR (CD₂Cl₂): 183,0 (s) ppm.
¹H-NMR (CD₂Cl₂): 1,23 (d, ³*J*_{HP}= 13,1 Hz; 9H); 6,88 (dd, *J* = 7,3 Hz; *J* = 1,1 Hz; 1H); 7,00 (dt, *J* = 7,4 Hz; *J*=0,9 Hz; 1H); 7,39 (d, *J* = 7,3 Hz 1H); 7,42 (d, *J* = 7,4 Hz; 1H); 7,50 (d, *J* = 8,5 Hz; 1H); 7,65 (d, *J*= 8,5 Hz; 1H); 8,09 (s, 1H); 8,97 (s, 1H) ppm.
¹³C NMR (CD₂Cl₂): 22,7 (d, ²*J*_{CP}= 17,9 Hz); 36,8 (d, *J*_{CP}= 30,4 Hz); 108,7; 110,7; 110,8; 112,4; 112,6; 112,9; 119,7; 120,7; 122,7; 126,6; 127,8; 132,7; 132,7; 134,7; 145,0; 145,0; 147,3; 147,3; 154,3 ppm.
ESI-TOF HRMS: *m*/*z* 313,09911 [M⁺+H], ber.: *m*/*z* 313,09881.

### Ligand 8: Di-(-)-menthyl-tert.-butylphosphonit (Vergleichsligand)

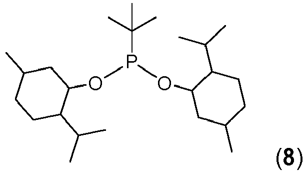

Eine gerührte Lösung von (-)-Menthol (0,585 g; 3,743 mmol) in THF (8 ml) wird bei 0 °C tropfenweise mit einer Lösung von Benzylkalium (0,487 g; 3,743 mmol) in THF (14 ml) versetzt. Man rührt weitere 30 min bei 0 °C und setzt dann eine Lösung von *tert*.-Butyldichlorphosphin (0,297 g; 1,871 mmol) in THF (6 ml) zu. Die Rektionsmischung wird über Nacht bei Raumtemperatur gerührt. Man filtriert, verdampft das Lösungsmittel des Filtrates im Vakuum und trocknet den Rückstand bei 40°C/0,1 mbar. Der erhaltene hochviskose Rückstand wird in Dichlormethan (4 ml) gelöst. Zu dieser Lösung wird langsam Acetonitril gegeben (9 ml) und die Mischung bei -23 °C gelagert. Der abgeschiedene viskose Rückstand wird mit kaltem Acetonitril (2 x 2 ml) gewaschen und im Vakuum getrocknet. Ausbeute: 0,260 g (0,652 mmol; 35%).

Elementaranalyse (ber. für C₂₄H₄₇O₂P = 398,61 g/mol): C 72,21 (72,32); H 11,92 (11,88); P 7,74 (7,77) %.
³¹P-NMR (CD₂Cl₂): 174,2 (s) ppm.
¹H-NMR (CD₂Cl₂): 0,78-0,83 (m, 6H); 0,83-1,52 (m, 31 H); 1,62-1,75 (m, 4H); 2,07-2,39 (m, 4H); 3,58-3,70 (m, 2H) ppm.
¹³C-NMR (CD₂Cl₂): 15,7; 16,7; 21,4; 21,6; 22,4; 23,0; 23,2; 23,5; 24,1; 24,3; 25,0; 25,2; 25,4; 32,0; 32,2; 34,5; 34.6; 34,7; 34,8; 44,8; 44,9; 44,9; 45,0; 49,9; 50,0; 50,0; 77,1 (d, ²*J*_{CP}= 13,0 Hz); 78,0 (d, ²*J*_{CP}= 13,5 Hz) ppm.
ESI-TOF/HRMS: *m*/*z* 399,33844; [M⁺+H], ber.: *m*/*z* 443,33864.

### Ligand 9: 4,6,8-Tri-tert.-butyl-2,10-dimethoxydibenzo[d,f][1,3,2]dioxaphosphepin (Vergleichsligand)

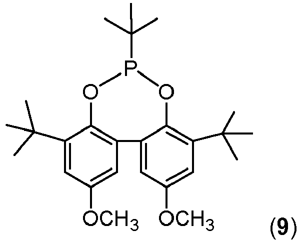

Zu einer Mischung von 3,3'-Di-*tert*.-butyl-5,5'-dimethoxy-[1,1'-biphenyl]-2,2'-diol (1,0 g; 2,790 mmol) und Triethylamin (0,86 ml; 6,137 mmol) in Toluol (10 ml) wird bei Raumtemperatur eine Lösung von *tert*.-Butyldichlorphosphin (0,443 g; 2,790 mmol) in Toluol (10 ml) getropft. Man rührt die Reaktionsmischung über Nacht, filtriert und engt das Filtrat im Vakuum ein. Der viskose Rückstand wird 2 h bei 50°C/0,1 mbar getrocknet, mit Acetonitril (5 ml) versetzt und 2 h gerührt. Der erhaltene Feststoff wird abfiltriert und zunächst mit Acetonitril (5 ml), dann mit Heptan (8 ml) verrührt. Filtration, Einengen des Filtrates und Trocknen des Rückstandes ergibt einen weißen Feststoff. Ausbeute: 0,37 g (0,832 mmol; 30%).

Elementaranalyse (ber. für C₂₆H₃₇O₄P = 444,55 g/mol): C 70,40 (70,25); H 8,53 (8,39); P 6,86 (6,97)%.
³¹P-NMR (CD₂Cl₂): 202,7 (s) ppm.
¹H-NMR (CD₂Cl₂): 1,20 (d, 9H, *J*_{HP}= 12,0 Hz); 1,49 (s, 18H); 3,83 (s, 6H); 6,70 (d, ⁴*J*_{HH}= 3,2Hz; 2H); 7,00 (d, ⁴*J*_{HH}= 3,2Hz; 2H) ppm.
¹³C-NMR (CD₂Cl₂): 24,5 (d; ²*J*_{CP}= 17,2 Hz); 31,4; 36,0; 38,3 (d, *J*_{CP}= 33,9 Hz); 55,9; 114,3; 114,9; 133,1; 141,7; 145,7; 155,4 ppm.
ESI-TOF/HRMS: *m*/*z* 445,25040; [M⁺+H], ber.: *m*/*z* 445,25022.

### Katalyseversuche

Die Hydroformylierung wurde in einem mit Druckkonstanthaltung, Gasflussmessung, Begasungsrührer und Druckpipette ausgestatteten 200 ml-Autoklaven der Fa. Premex Reactor AG, Lengau, Schweiz, durchgeführt. Zur Minimierung eines Einflusses von Feuchtigkeit und Sauerstoff wurde das als Solvens benutzte Toluol in einem Pure Solv. MD-7 System gereinigt und unter Argon aufbewahrt. Das als Substrat eingesetzte Gemisch der n-Octene (Oxeno GmbH, Octenisomerengemisch aus 1-Octen: 3 %; *cis*+*trans*-2-Octen: 49 %; *cis*+*trans*-3-Octen: 29 %; *cis+trans-Octen-4:* 16 %; gerüstisomere Octene: 3 %) wurden über Natrium am Rückfluß erhitzt und unter Argon destilliert.

Im Autoklaven wurden unter Argonatmosphäre Lösungen der Katalysatorvorstufe und des Liganden gemischt. Als Katalysatorvorstufe kam [(acac)Rh(COD)] (Umicore, acac = Acetylacetonat-Anion; COD = 1,5-Cyclooctadien) zum Einsatz. Von der Rhodiumverbindung wurden 10 ml einer 4,31 millimolaren Lösung in den Autoklaven gegeben. Anschließend wurde die entsprechende Menge an Liganden (Rh/Ligand = 1:5) in 10 ml Toluol gelöst und zugemischt. Durch Zugabe von weiterem Toluol wurde das Anfangsvolumen der Katalysatorlösung auf 41,0 ml eingestellt. In eine druckfeste Pipette wurden die n-Octene (10,70 g; 95,35 mmol) eingefüllt. Der Autoklav wurde bei einem Gesamtgasdruck (Synthesegas: Linde; H₂ (99,999%) : CO (99,997%) = 1:1) von 42 bar aufgeheizt. Nach Erreichen der Reaktionstemperatur von 120 °C wurde der Synthesegasdruck auf 48,5 bar erhöht und das Olefin mit einem in der Druckpipette eingestellten Überdruck von ca. 3 bar in den Autoklaven gepresst. Die Reaktion wurde bei konstantem Druck von 50 bar (Nachdruckregler der Fa. Bronkhorst, NL) über 4 h geführt. Der Autoklav wurde nach Ablauf der Reaktionszeit auf Zimmertemperatur abgekühlt, unter Rühren entspannt und mit Argon gespült. Jeweils 1 ml der Reaktionsmischungen wurden unmittelbar nach Abschalten des Rührers entnommen, mit 10 ml Pentan verdünnt und gaschromatographisch analysiert: HP 5890 Series II plus, PONA, 50 m x 0,2 mm x 0,5 µm.

### Ergebnisse der Katalyseversuche

**Tabelle 1: Hydroformylierung der n-Octene**

| Ligand | Anteil Nonanal am Gesamtaldehyd (%) |
|---|---|
| **1*** | 28,9 |
| **2*** | 28,5 |
| **3** | 22,4 |
| **4** | 8,9 |
| **5** | 5,5 |
| **6** | 8,5 |
| **7** | 16,6 |
| **8** | 6,2 |
| **9** | 8,7 |

| | |
|---|---|
| * erfindungsgemäße Verbindung | |

Wie die oben beschriebenen Versuche zeigen, wird die Aufgabe durch eine erfindungsgemäße Verbindung gelöst.

## Patentansprüche

1. Verbindung der Formel (**I**): 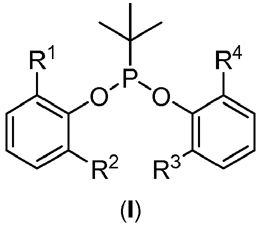 wobei
R¹, R², R³, R⁴ ausgewählt sind aus: -H, -(C₁-C₁₂)-Alkyl, -O-(C₁-C₁₂)-Alkyl, -(C₆-C₂₀)-Aryl, -O-(C₆-C₂₀)-Aryl;
wobei mindestens einer der Reste R¹, R², R³, R⁴ nicht für -H steht;
wobei die genannten Alkylgruppen und Arylgruppen wie folgt substituiert sein können:
substituierte -(C₁-C₁₂)-Alkylgruppen, substituierte -O-(C₁-C₁₂)-Alkyl, substituierte -(C₆-C₂₀)-Aryl, substituierte -O-(C₆-C₂₀)-Aryl können einen oder mehrere Substituenten aufweisen; die Substituenten sind unabhängig voneinander ausgewählt aus: -(C₁-C₁₂)-Alkyl, -O-(C₁-C₁₂)-Alkyl, Halogen.

2. Verbindung nach Anspruch 1,
wobei R¹, R², R³, R⁴ ausgewählt sind aus: -(C₁-C₁₂)-Alkyl, -(C₆-C₂₀)-Aryl.

3. Verbindung nach einem der Ansprüche 1 oder 2,
wobei R¹, R², R³, R⁴ für -(C₁-C₁₂)-Alkyl stehen.

4. Verbindung nach einem der Ansprüche 1 bis 3,
wobei R¹, R², R³, R⁴ für -(C₆-C₂₀)-Aryl stehen.

5. Verbindung nach einem der Ansprüche 1 bis 4,
wobei R¹, R², R³, R⁴ für den gleichen Rest stehen.

6. Verwendung einer Verbindung nach Anspruch 1 bis 5,
in einem Ligand-Metall-Komplex zur Katalyse einer Hydroformylierungsreaktion.

7. Verfahren umfassend die Verfahrensschritte:
a) Vorlegen eines Olefins,
b) Zugabe eines Komplexes, welcher eine Verbindung gemäß den Ansprüchen 1 bis 5 umfasst, sowie ein Metall ausgewählt aus: Rh, Ru, Co, Ir,
oder einer Verbindung nach einem der Ansprüche 1 bis 5 und einer Substanz, welche ein Metall ausgewählt aus: Rh, Ru, Co, Ir aufweist;
c) Zuführen von H₂ und CO,
d) Erwärmen des Reaktionsgemisches, wobei das Olefin zu einem Aldehyd umgesetzt wird.

## Claims

1. Compound of the formula (I): 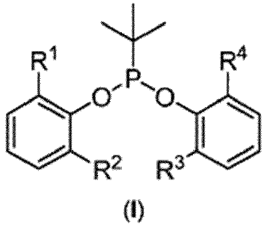 wherein
R¹, R², R³, R⁴ are selected from -H, -(C₁-C₁₂) alkyl, -O-(C₁-C₁₂) alkyl, -(C₆-C₂₀) aryl, -O-(C₆-C₂₀) aryl,
wherein at least one of the radicals R¹, R², R³, R⁴ is not -H;
wherein the alkyl groups and aryl groups mentioned may be substituted as follows:
substituted -(C₁-C₁₂) alkyl groups, substituted -O-(C₁-C₁₂) alkyl, substituted -(C₆-C₂₀) aryl, substituted -O-(C₆-C₂₀) aryl may have one or more substituents; the substituents are independently selected from: -(C₁-C₁₂) alkyl, -O-(C₁-C₁₂) alkyl, halogen.

2. Compound according to Claim 1, wherein R¹, R², R³, R⁴ are selected from: -(C₁-C₁₂) alkyl, -(C₆-C₂₀) aryl.

3. Compound according to one of Claims 1 and 2, wherein R¹, R², R³, R⁴ are -(C₁-C₁₂) alkyl.

4. Compound according to one of Claims 1 to 3, wherein R¹, R², R³, R⁴ are -(C₆-C₂₀) aryl.

5. Compound according to one of Claims 1 to 4, wherein R¹, R², R³, R⁴ are the same radical.

6. Use of a compound according to Claims 1 to 5 in a ligand-metal complex for the catalysis of a hydroformylation reaction.

7. Method comprising the method steps:
a) providing an olefin,
b) adding a complex which comprises a compound according to Claims 1 to 5 and also a metal selected from: Rh, Ru, Co, Ir,
or a compound according to one of Claims 1 to 5 and a substance having a metal selected from: Rh, Ru, Co, Ir;
c) feeding in H₂ and CO,
d) heating the reaction mixture, as a result of which the olefin is converted to an aldehyde.

## Revendications

1. Composé de la formule (I) : 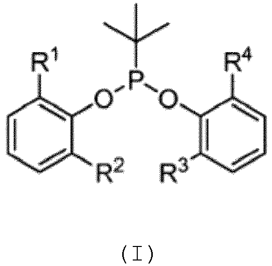
R¹, R², R³, R⁴ étant choisis parmi : -H, -C₁₋₁₂-alkyle, -O-C₁₋₁₂-alkyle, -C₆₋₂₀-aryle, -O-C₆₋₂₀-aryle ;
au moins un des radicaux R¹, R², R³, R⁴ ne représentant pas -H ;
les groupes alkyle et les groupes aryle mentionnés pouvant être substitués comme suit :
les groupes -C₁₋₁₂-alkyle substitués, -O-C₁₋₁₂-alkyle substitués, -C₆₋₂₀-aryle substitués, -O-C₆₋₂₀-aryle substitués peuvent présenter un ou plusieurs substituant(s) ; les substituants sont choisis indépendamment les uns des autres parmi : -C₁₋₁₂-alkyle, -O-C₁₋₁₂-alkyle, halogène.

2. Composé selon la revendication 1, R¹, R², R³, R⁴ étant choisis parmi : -C₁₋₁₂-alkyle, -C₆₋₂₀-aryle.

3. Composé selon l'une quelconque des revendications 1 ou 2, R¹, R², R³, R⁴ représentant -C₁₋₁₂-alkyle.

4. Composé selon l'une quelconque des revendications 1 à 3, R¹, R², R³, R⁴ représentant -C₆₋₂₀-aryle.

5. Composé selon l'une quelconque des revendications 1 à 3, R¹, R², R³, R⁴ représentant le même radical.

6. Utilisation d'un composé selon les revendications 1 à 5, dans un complexe ligand-métal pour la catalyse d'une réaction d'hydroformylation.

7. Procédé comprenant les étapes de procédé :
a) mise à disposition d'une oléfine,
b) ajout d'un complexe, lequel comprend un composé selon les revendications 1 à 5, ainsi qu'un métal choisi parmi : Rh, Ru, Co, Ir,
ou d'un composé selon l'une quelconque des revendications 1 à 5 et d'une substance qui présente un métal choisi parmi : Rh, Ru, Co, Ir ;
c) introduction de H₂ et de CO,
d) chauffage du mélange réactionnel, l'oléfine étant transformée en un aldéhyde.
